# EUROPÄISCHE PATENTANMELDUNG

(11) **EP 1 245 859 A2**
(43) Veröffentlichungstag der Anmeldung: **02.10.2002**
(21) Anmeldenummer: 02005949.9
(22) Anmeldetag: 15.03.2002
(51) Int. Cl.: F16F 15/04

(54) **Schwingungsisolierende Lagerung für einen Motor oder eine motorisch angetriebene Baueinheit**

(30) Priorität: 27.03.2001 DE 10115032
(71) Anmelder: Electrolux Home Products Corporation N.V., 1930 Zaventem (BE)
(72) Erfinder: Mack, Friedrich, 90478 Nürnberg (DE); Eckert, Holger, 90469 Nürnberg (DE)
(74) Vertreter: Baumgartl, Gerhard Willi

(57) **Zusammenfassung**

Die Erfindung betrifft eine schwingungsisolierende Lagerung für einen Motor (9) oder eine motorisch angetriebene Baueinheit eines Haushaltsgeräts, insbesondere für eine Umwälzpumpe einer Geschirrspülmaschine, mit zumindest einem elastischen Lagerelement (12) zwischen einer Motorhalterung (15) und dem Motor (9) oder der Baueinheit. Erfindungsgemäß sind zumindest zwei oder ein länglich ausgebildetes Lagerelement (12) vorgesehen, die auf den Motor (9) oder die motorische Baueinheit eine Kraft in oder aus der Richtung der Dreh- oder Schwerpunktachse (16) des Motors (1) oder der motorischen Baueinheit ausüben. Die Lagerung ist dabei bezüglich eines Pendelmoments um die Dreh- oder Schwerpunktachse (16) besonders weich und verringert entsprechend eine Schwingungsübertragung über die Lagerung.

## Beschreibung

Die Erfindung betrifft eine schwingungsisolierende Lagerung für einen Motor oder eine motorisch angetriebene Baueinheit, insbesondere für eine Umwälzpumpe einer Geschirrspülmaschine, mit zumindest einem elastischen Lagerelement zwischen einer Motorhalterung und dem Motor oder der Baueinheit.

Bei einer herkömmlichen Motorlagerung wird ein Asynchronmotor zum Antreiben der Umwälzpumpe einer Geschirrspülmaschine über Gummifüße am Unterbau der Geschirrspülmaschine gelagert. Die Gummifüße dämpfen die Pendel- bzw. Drehbewegungen des Asynchronmotors, welche bei Betrieb des Asynchronmotors oder während einer Drehzahländerung bzw. des impulsartigen Antriebs auftreten, so daß eine Schwingungsübertragung auf die Motorhalterung und damit den Unterbau der Geschirrspülmaschine reduziert wird. Die Lagerung auf den Gummifüßen beschränkt jedoch die Bewegungsfreiheit des Motors, so daß die Pendel- bzw. Drehmomentimpulse des Asynchronmotors trotz der Dämpfung noch auf die Motorhalterung und somit den Rahmen der Geschirrspülmaschine übertragen werden. Dies erzeugt nach Außen wahrnehmbare Motorgeräusche der Geschirrspülmaschine. Darüber hinaus ist durch die Befestigung mittels der Gummifüße die Einbaulage des Motors vorgegeben und kann nur geringfügig angepaßt werden.

Davon ausgehend ist es die Aufgabe der Erfindung, eine schwingungsisolierende Lagerung für einen Motor oder eine motorisch angetriebene Baueinheit vorzuschlagen, bei der der Motor eine möglichst uneingeschränkte Bewegungsfreiheit hat und ebenso eine flexible Positionierung des Motors bzw. der motorisch angetriebenen Baueinheit erfolgen kann.

Diese Aufgabe wird mit den Merkmalen des Anspruchs 1 bzw. 2 gelöst.

Gemäß Anspruch 1 wird der Motor oder die motorisch angetriebene Baueinheit bzw. -gruppe durch zumindest zwei elastische Lagerelemente in der Motorhalterung gelagert, wobei jedes Lagerelement eine Kraft in oder aus der Richtung der Dreh- oder Schwerpunktachse ausübt. Gemäß Anspruch 2 ist zur Lagerung des Motors oder der Baueinheit bzw. -gruppe zumindest ein Lagerelement vorgesehen, das in Richtung Drehoder Schwerpunktachse länglich ausgebildet ist und ebenfalls eine Kraft in oder aus der Richtung der Dreh- oder Schwerpunktachse ausübt. Somit steht die durch das Lagerelement ausgeübte Kraft senkrecht zur Dreh- oder Schwerpunktachse oder bildet mit der Dreh- oder Schwerpunktachse einen Winkel und übt daher am Motor keine Kraft tangential zur Dreh- oder Schwerpunktachse aus. Die Kraft kann bei unterstützender Lagerung in Richtung oder bei hängender Lagerung aus Richtung der Dreh- oder Schwerpunktachse wirken.

Die Schwerpunktachse bzw. Trägheitsachse des Motors oder der Baueinheit weicht in dem Fall von der Drehachse ab, wenn die Massenverteilung des Motors oder der Baueinheit unsymmetrisch bezüglich der Drehachse ist. Bei der hängenden Lagerung liegt dann die Drehachse nicht notwendigerweise unter der Schwerpunktachse. Da das Pendelmoment des Motors jedoch entweder um die Dreh- oder die Schwerpunktachse auftritt, wird die obige Ausrichtung der Lagerelemente zur entsprechenden Achse vorgesehen. Wenn im folgenden auf die Drehachse Bezug genommen wird, so gilt das Gesagte entsprechend für die Schwerpunktachse, wenn die Lagerelemente zu dieser ausgerichtet sind.

Die elastischen Lagerelemente sind in Richtung Drehachse steifer ausgebildet als zumindest um eine Dreh- bzw. Biegungsachse des Lagerelements, die parallel zur Drehachse versetzt ist. Durch die Steifigkeit in Richtung Drehachse wird das Gewicht des Motors oder der Baueinheit aufgenommen. Dagegen ermöglicht die weiche Lagerung um eine Dreh- bzw. Biegeachse des Lagerelements, daß der Motor oder die Baueinheit ein Pendeln oder Drehen um kleine Winkel um die Drehachse nahezu ohne Gegenkraft bzw. Dämpfung ausführt. Damit sind die Pendelbewegungen vollständig oder nahezu vollständig von der Motorhalterung entkoppelt. Dies hat eine erhebliche Geräuschreduzierung bei Betrieb des Motors zur Folge.

Ein elastisches Lagerelement ist dabei regelmäßig ein elastisch verformbares Element, wie ein Gummiformteil, eine Schraubenfeder, ein elastisch federndes Bogenelement oder dergleichen. Die Befestigung des Lagerelements am Motor oder der Baueinheit bzw. an der Motorhalterung kann dabei punktförmig, flächig oder auf sonstige Weise ausgebildet sein. Wesentlich ist dabei, daß die resultierende Kraft, die z.B. von der verteilten Befestigung eines Elements auf den Motor oder die Baueinheit ausgeübt wird, senkrecht zur Drehoder Schwerpunktachse wirkt, so daß ein freies Pendeln bzw. Drehen ermöglicht wird.

Die Kraftrichtung, die das Lagerelement ausübt, kann in Richtung Motor oder von diesem weg gerichtet sein. * Vorzugsweise wird eine hängende Lagerung gewählt, bei der das Lagerelement eine Kraft ausübt, die z.B. radial von der Drehoder Schwerpunktachse weg gerichtet ist. In diesem Fall kann das elastische Lagerelement besonders weich, d.h. mit einer geringen Steifigkeit, ausgebildet werden, da durch die hängende Lagerung trotz einer Auslenkung des Lagerelementes kein Verbiegen oder Umknicken des Lagerelementes und dadurch eine Auslenkung des Motors oder der Baueinheit aus der vorgesehenen Lage auftritt. Durch die hängende Lagerung wird die Bewegungsfreiheit des Motors oder der Baueinheit weitgehend erhalten, so daß z.B. auftretende Pendelmomente eines Synchron- oder Asynchronmotors beim Betrieb zu einer Drehung bzw. Auslenkung des Motors oder der Baueinheit führen, ohne daß über das elastische Lagerelement Kräfte auf die Motorhalterung des Gerätes, in dem der Motor oder die Baueinheit eingebaut ist, übertragen werden.

Über die Wahl der Länge oder des Querschnitts des elastischen Lagerelements kann eine einfache Anpassung der Elastizität des Lagerelements an geänderte Anforderungen erfolgen.

Aufgrund der hängenden Lagerung kann der Motor oder die Baueinheit einfach seitlich oder vertikal ausgelenkt werden, um den Motor oder die Baueinheit in der ausgelenkten Position zu montieren, z.B. um eine Umwälzpumpe einer Geschirrspülmaschine an die Anschlußschläuche anzuschließen. Somit können Fertigungstoleranzen beim Einbau des Motors oder der Baueinheit z.B. in ein Haushaltsgerät auf besonders einfache Weise ohne eine Änderung der Befestigungspositionen ausgeglichen werden. Durch Dehnen oder Stauchen der Lagerelemente kann ebenso ein vertikaler Versatz problemlos ausgeglichen werden.

Dadurch, daß der längere Querschnitt des länglich ausgebildeten Lagerelements parallel zur Drehachse verläuft, ist die Steifigkeit des Lagerelements gegenüber einer Drehung um die Achse des Lagerelements, die senkrecht zur Drehachse verläuft, erhöht. Damit wird einer Drehung des Motors oder der Baueinheit um die Achse des Lagerelements entgegengewirkt.

Bei einer vorteilhaften Ausgestaltung ist die Steifigkeit des Lagerelements um die parallel zur Drehachse des Motors verlaufende Biegeachse des Lagerelements besonders reduziert, so daß das Pendeln des Motors noch ungedämpfter erfolgen kann. Beispielsweise weist hierfür das Lagerelement einen Abschnitt auf, in dem der Querschnitt in einer zur Drehachse des Motors parallelen Richtung gegenüber der dazu senkrecht verlaufenden Richtung reduziert ist.

Bei einer besonders vorteilhaften Ausgestaltung sind zumindest zwei elastische Lagerelemente vorgesehen, deren Befestigungen am Motor oder der Baueinheit auf einer Linie liegen, die parallel zur Drehachse verläuft, oder deren Befestigungen in einer Ebene liegen, in der die Drehachse liegt. Dadurch wird einer Änderung der Raumorientierung der Drehachse durch die Lagerelemente dämpfend entgegengewirkt, d.h. eine Drehung des Motors um die Achse der Lagerelemente wird gedämpft. Zusätzlich wird dabei ein Wippen des Motors um dessen Drehachse gedämpft.

Gemäß einer vorteilhaften Ausgestaltung werden zumindest zwei Lagerelemente vorgesehen, bei denen in einer zur Drehachse des Motors parallelen Richtung der Abstand zwischen den Lagerelementen ( z.B. von den unteren Befestigungspunkten zu den oberen Befestigungspunkten) zunimmt. Dadurch wird eine Auslenkung des Motors in einer zur Drehachse parallelen Richtung durch die auseinanderlaufenden Lagerelemente stärker gedämpft.

Durch die am Umfang des Motors oder der Baueinheit versetzt zueinander angeordneten Befestigungen von zumindest zwei elastischen Lagerelementen wird ebenfalls eine Drehung des Motors oder der Baueinheit um die Achse der Lagerelemente gedämpft.

Gemäß einer weiteren Ausgestaltung wird zumindest für einen Teil der elastischen Lagerelemente jeweils ein Anschlag vorgesehen, der den maximalen Auslenkungsweg des Motors bzw. der Baueinheit begrenzt und verhindert, daß der Motor bzw. die Baueinheit soweit aus der vorgesehenen Montageposition ausgelenkt wird, daß durch Stöße umliegende Einrichtungen oder der Motor bzw. die Baueinheit beschädigt werden. Der Anschlag dient ebenfalls als Tränsportsicherung für den Motor oder die Baueinheit.

Bei einer besonders vorteilhaften Ausgestaltung ist der Querschnitt zumindest eines Abschnitts der elastischen Lagerelemente zwischen den Befestigungspunkten verjüngt. Hierbei wächst bei einer Auslenkung des Motors in Richtung der Verbindungslinie der Befestigungspunkte des Lagerelementes bzw. bei einer seitlichen Auslenkung des Lagerelementes die Rückstellkraft mit zunehmender Auslenkung nichtlinear an. Bei kleinen Auslenkungen bleibt somit die Rückstellkraft gering, während bei unerwünschten großen Auslenkungen die Rückstellkraft überproportional zum Auslenkungsweg zunimmt und einer zu großen Auslenkungen durch die zunehmende Rückstellkraft entgegengewirkt wird.

Durch die Aufhängung des Motors an einem Winkelelement, an einem Galgenelement oder an einem Bogenelement wird eine besonders einfache Befestigung am Boden oder einer Seitenwand vorgesehen, wenn für die hängende Lagerung des Motors oder der Baueinheit im darüberliegenden Bereich keine geeignete Motorhalterung zur Verfügung steht.

Bei einer vorteilhaften Ausgestaltung sind die Enden der Lagerelemente dicker ausgebildet und/oder weisen Ausnehmungen z.B. in Form von Ösen auf, so daß die Lagerelemente schnell montierbar sind. Die verdickten Enden werden bei der Montage z.B. in hinterschnittene Nuten eingeführt, die senkrecht zur Achse der Lagerelemente verlaufen oder die Ösen werden in Haken am Motor oder der Baueinheit eingehängt.

Anhand von Figuren werden Ausführungsformen der Erfindung erläutert.

Es zeigen:
- Fig. 1: eine an einem O-Ring hängend gelagerte Umwälzpumpe einer Geschirrspülmaschine,
- Fig. 2A und 2B: einen Elektromotor, der an einem Winkel hängend gelagert ist,
- Fig. 3A: eine Seiten- und Vorderansicht eines an Gummibändern gelagerten Elektromotors,
- Fig. 4A und 4B: eine Seiten- und Vorderansicht eines an seitlichen Gummibändern gelagerten Elektromotors,
- Fig. 5: einen hängend gelagerten Elektromotor mit Anschlagelementen für die Gummielemente,
- Fig. 6: eine weitere Ausführungsform einer hängenden Lagerung eines Elektromotors,
- Fig. 7: die Lagerung eines Elektromotors an einem Bogenelement und
- Fig. 8: die Lagerung eines Elektromotors an einer Traverse.

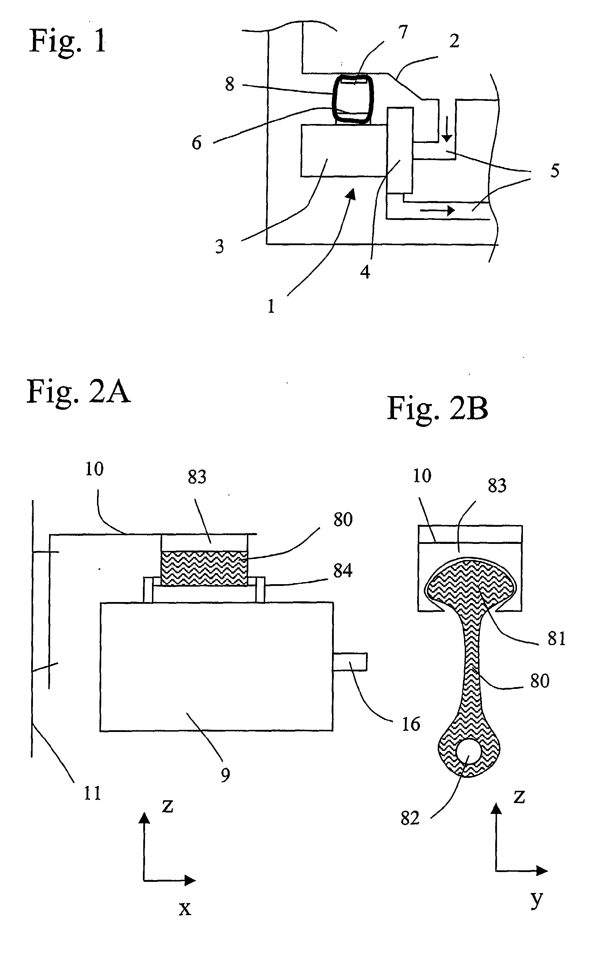

Fig. 1 zeigt schematisch einen Ausschnitt aus dem Unterbau einer Geschirrspülmaschine. Eine Umwälzpumpe 1 der Geschirrspülmaschine ist an der Unterseite eines Spülbehälters 2 hängend gelagert. Ein Pumpenkopf 4 der Umwälzpumpe 1 ist über flexible Schläuche 5 mit dem Spülmaschinensumpf und den Sprüharmen verbunden (nicht dargestellt). An der Oberseite eines Asynchronmotors 3 der Umwälzpumpe 1 ist ein erster, breit ausgebildeter Haken 6 angeordnet, der unterhalb eines an der Unterseite des Spülbehälters 2 angeordneten zweiten Hakens 7 positioniert ist. Zwischen den Haken 6, 7 ist ein O-Ring 8 gespannt, an dem der Asynchronmotor 3 hängend gelagert ist. Durch das Aufspannen des O-Rings 8 mittels der breit ausgebildeten Haken 6, 7 wird die Pumpe am Spülbehälter 2 durch zwei ungefähr parallel und vertikal verlaufende O-Ringabschnitte getragen, die ein horizontales Wippen der Pumpe 1 und eine Drehung um eine vertikale Richtung dämpfen.

Zum Ausgleich von Fertigungstoleranzen bei der Montage der Umwälzpumpe in der Geschirrspülmaschine kann die hängend gelagerte Umwälzpumpe 1 aufgrund des Spiels durch den O-Ring 8 einfach seitlich verschoben werden. Statt eines O-Rings kann auch ein Gummiband oder ein Schlauchabschnitt eingesetzt werden. Eine Anpassung der Elastizität des O-Rings 8 oder des Schlauchabschnittes an veränderte Dämpfungserfordernisse erfolgt durch Änderung des Querschnitts des O-Rings 8 bzw. der Länge des Schlauchabschnittes.

Fig. 2A und 2B zeigen eine zweite Ausführungsform der hängenden Lagerung eines Elektromotors 9 an einem Winkel 10, der an einer Seitenwand 11 der Geschirrspülmaschine befestigt ist. Am Winkel 10 ist eine Klammer 83 mit einer unterschnittenen Nut angeordnet. Wie in der vergrößerten Querschnittsdarstellung des Bandes 80 in Fig. 2B dargestellt, ist in die Nut ein verbreitertes, oberes Ende 81 eines elastischen Bandes 80 eingeschoben. Das Band 80 wird in der Nut mittels eines Splintes oder einer anderen Sicherungseinrichtung gegen ein Verschieben gesichert. Am unteren Ende des Bandes 80 ist beidseitig eine Ausnehmung 82 ausgebildet. In die Ausnehmungen 82 greifen zwei an der Oberseite des Motors 9 angeordnete Dorne 84 ein. Bei der Montage wird das Band 80 verbogen und im gebogenen Zustand auf die Dorne 84 aufgeschoben.

Die Lagerung der Pumpe 1 und des Motors 9 erfolgt durch den O-Ring 8 bzw. das Band 80 derart, daß in vertikale Richtung (z-Richtung) eine hohe Steifigkeit zum Tragen des Gewichts der Pumpe 1 bzw. des Motors 9 vorhanden ist und durch die Elastizität der Elemente 8, 80 trotzdem eine Dämpfung bei der Schallübertragung in z-Richtung erfolgt. Eine Drehauslenkung der Pumpe 1 bzw. des Motors 9 um kleine Winkel um die Drehachse 16 (x-Richtung) kann durch die geringe Steifigkeit der Elemente 8, 80 nahezu ungedämpft erfolgen und es werden durch die Rotation nahezu keine Kräfte auf die Motoraufhängungen 2, 10 übertragen. Eine Drehung um die vertikale Achse (z-Richtung) wird durch das Aufspannen des O-Rings 8 bzw. die längliche Ausdehnung des Bandes 80 in x-Richtung stark gedämpft.

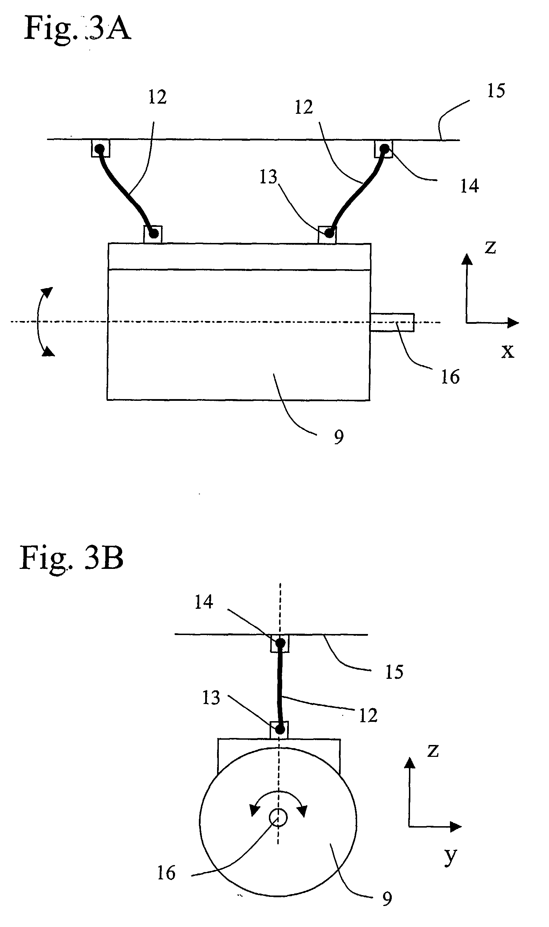

Fig. 3A und 3B zeigen eine dritte Ausführungsform der hängenden Lagerung des Elektromotors 9 an zwei Gummibändern 12. Die beiden Gummibänder 12 sind an der Oberseite des Elektromotors 9 an zwei Befestigungspunkten 13 befestigt. Fig. 3A zeigt eine Seitenansicht des Elektromotors 9, aus der ersichtlich ist, daß der Abstand der Befestigungspunkte 13 an der Oberseite des Elektromotors 9 kleiner ist, als der Abstand der Befestigungspunkte 14 an der Motorhalterung 15. Fig. 3B zeigt eine Vorderansicht des Elektromotors 9 in Richtung der Motorwelle 16.

Bei dieser Zweipunkt-Lagerung von Fig. 3A und 3B mit der asymmetrischen Aufhängung des Elektromotors 9 wird eine Auslenkung des Elektromotors 9 in Richtung der Motorwelle 16 (x-Richtung) gedämpft, während eine Auslenkung des Elektromotors 9 seitlich zur Motorwelle 16 (y-Richtung) nahezu ungedämpft erfolgt. Weiterhin wird eine Änderung der Raumrichtung der Rotationsachse durch die Gummibänder 12 gedämpft, d.h. ein Wippen des Motors 9 um die Drehachse wie in Fig. 3A mit dem Doppelpfeil dargestellt wird verhindert. Eine Rotationsbewegung um die x-Achse durch das Pendelmoment des Elektromotors 9 (siehe Doppelpfeil um die Motorwelle 16 in Fig. 3B) hat in radialer Richtung zur Motorwelle 16 keine Kraftkomponente, da die Auslenkung tangential erfolgt. Da die Befestigungspunkte 13 vertikal oberhalb der Motorwelle sind, wird somit auf die Gummibänder 12 keine Kraft in y-Richtung ausgeübt, die auf die Motorhalterung 15 übertragen werden könnte. Dies gilt entsprechend für die anderen Ausführungsformen, so daß bei diesen Lagerungen die Pendelbewegung der Motoren nahezu keine Vibrationen der Motoraufhängung 15 zur Folge haben.

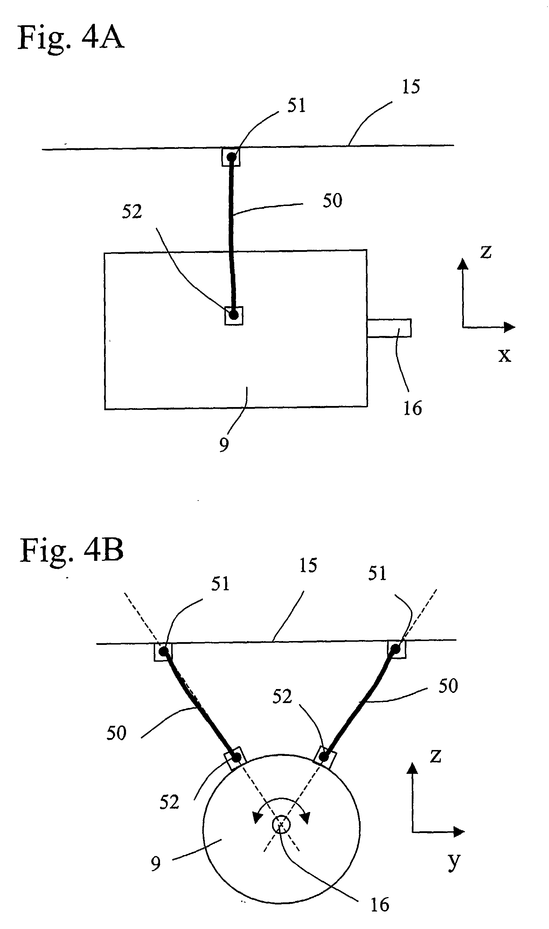

Fig. 4A zeigt die Seitenansicht einer vierten Ausführungsform der hängenden Lagerung des Elektromotors 9. Zwei Gummibänder 50 sind an seitlichen Befestigungspunkten 52 des Motors 9 eingeklemmt und verlaufen V-förmig nach oben auseinander, wo sie an zwei Befestigungspunkten 51 an. der Motorhalterung 15 eingespannt sind. Wie aus der Vorderansicht des Motors 9 in Fig. 4B ersichtlich ist, kreuzen sich die Verlängerungen der Gummibänder 50 (gestrichelt dargestellt) in einem Punkt der Motorwelle 16 des Motors 9. D.h., die Achsen der Gummibänder 50 liegen auf Radien bezüglich der Drehachse 16. Daher erfolgt die Kraftübertragung durch die Gummibänder 50 in Achsrichtung, die radial zur Drehachse ausgerichtet ist. In den Befestigungspunkten 52 tritt keine Tangentialkraft senkrecht zur Achse der Gummibänder 50 auf. Gleichzeitig ist die Steifigkeit der Gummibänder in Tangentialrichtung besonders gering, so daß kleine Pendelbewegungen des Motors mit ausschließlich tangentialer Komponente durch die Gummibänder nahezu ungehindert erfolgt. Dagegen wird durch die Gummibänder eine Drehung um die z-Richtung ebenso wie eine Auslenkung in y-Richtung stark gedämpft.

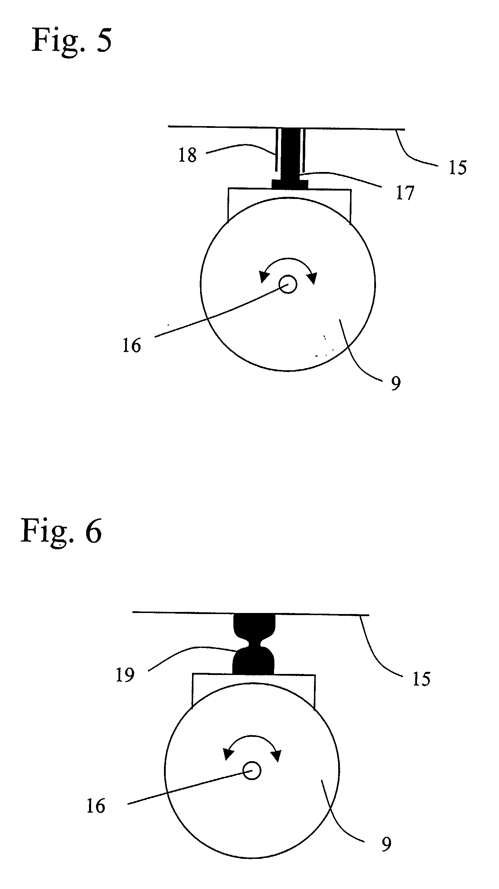

Fig. 5 zeigt eine Vorderansicht des Elektromotors 9, der gemäß einer fünften Ausführungsform hängend gelagert ist. Die Oberseite des Elektromotors 9 ist über zwei in Richtung der Motorwelle 16 hintereinanderliegende Gummistempel 17 mit der Motorhalterung 15 verbunden. Die Gummistempel 17 weisen an der Oberseite des Elektromotors 9 eine verbreiterte Basis auf und werden teilweise von an der Motorhalterung 15 befestigten Hülsen 18 umschlossen. Der Innendurchmesser der Hülsen 18 ist größer als der Außendurchmesser der Gummistempel 17 im Bereich der Hülsen 18, jedoch kleiner als die verbreiterte Basis der Stempel 17.

Bei kleineren Auslenkungen des Elektromotors 9 können sich die Gummistempel 17 frei innerhalb der Hülsen 18 bewegen, so daß eine Dämpfung lediglich über die Rückstellkraft der Gummistempel 17 erfolgt. Erst bei größeren Auslenkungen des Elektromotors 9 kommen die Gummistempel entweder mit ihren Seitenflächen oder mit der Oberseite der verbreiterten Basis an den Hülsen 18 zu liegen und die Dämpfungswirkung wird erhöht, da bei Anlage der Gummistempel 17 an den Hülsen 18 nur noch das verkürzte Stück zwischen den Hülsen 18 und der Befestigungsstelle der Gummistempel 17 an der Oberseite des Elektromotors 9 zur Dämpfung beiträgt.

Fig. 6 zeigt eine sechste Ausführungsform der hängenden Lagerung des Elektromotors 9. Der Elektromotor 9 ist an seiner Oberseite über einen Gummipuffer 19 mit der Motorhalterung 15 verbunden. Der Querschnitt des rotationssymmetrischen Gummipuffers 19 ist im mittleren Bereich verjüngt. Bei einer Auslenkung des Elektromotors 9 nach oben oder zur Seite wird der Gummipuffer 19 im Bereich des verjüngten Querschnitts am stärksten gestaucht bzw. auseinandergezogen und mit zunehmender Auslenkung kommen die sich an den verjüngten Querschnitt anschließenden Schultern zur gegenseitigen Anlage, so daß sich bei größeren Auslenkungen eine stärkere Rückstellkraft ergibt. Damit erfolgt für kleine Auslenkungen eine sehr weiche Lagerung, während bei größeren Auslenkungen des Elektromotors 9 eine stärkere Dämpfung eintritt. Die Gummielemente 17 und 19 verhindern durch die nichtlineare Dämpfung ein Anschlagen des Motors 9 an angrenzende Teile der Geschirrspülmaschine während eines Transports oder bei hohen Laständerungen.

Für die Aufhängung des Motors können die elastischen Elemente gemäß der Ausführungsformen eins bis sechs entsprechend miteinander kombiniert werden, so daß eine möglichst freie Drehung des Motors um dessen Drehachse (der Motorwelle) erhalten bleibt.

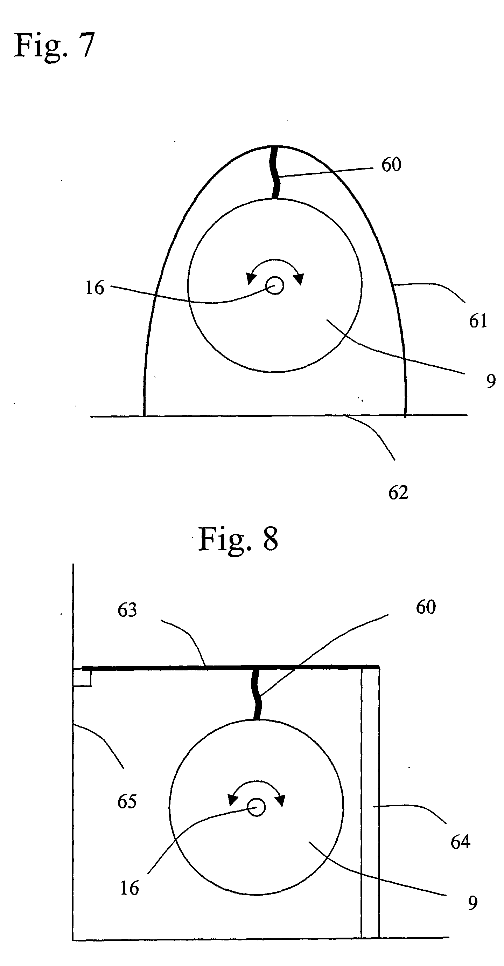

Fig. 7 zeigt die Aufhängung des Elektromotors 9 an einem Gummiband 60, das an einem bogenförmigen Trägerelement 61 befestigt ist. Das Trägerelement 61 ist auf ein Bodenblech 62 der Geschirrspülmaschine geschraubt bzw. ist dort eingeklemmt, so daß eine hängende Lagerung nicht an Bauelementen der Geschirrspülmaschine erfolgen muß, die oberhalb des Motors 9 angeordnet sind.

Fig. 8 zeigt die Aufhängung des Elektromotors 9 mit dem Gummiband 60 an einer Traverse 63, die auf einem Stützblech 64 und einer Seitenwand 65 der Geschirrspülmaschine gelagert ist.

### Bezugszeichenliste

- 1:: Umwälzpumpe
- 2:: Spülbehälter
- 3:: Asynchronmotor
- 4:: Pumpenkopf
- 5:: flexibler Schlauch
- 6:: erster Haken
- 7:: zweiter Haken
- 8:: O-Ring
- 9:: Elektromotor
- 10:: Winkel
- 11:: Seitenwand
- 12:: Gummiband
- 13:: Befestigungspunkt
- 14:: Befestigungspunkt
- 15:: Motorhalterung
- 16:: Motorwelle
- 17:: Gummistempel
- 18:: Hülse
- 19:: Gummipuffer
- 50:: Gummiband
- 51:: oberer Befestigungspunkt
- 52:: unterer Befestigungspunkt
- 60:: Gummiband
- 61:: Trägerelement
- 62:: Bodenblech
- 63:: Traverse
- 64:: Stützblech
- 80:: elastisches Band
- 81:: oberes Ende
- 82:: Ausnehmung
- 83:: Klammer
- 84:: Dorn

## Patentansprüche

1. Schwingungsisolierende Lagerung für einen Motor oder eine motorisch angetriebene Baueinheit eines Haushaltsgeräts, insbesondere für eine Umwälzpumpe einer Geschirrspülmaschine, mit zumindest einem elastischen Lagerelement zwischen einer Motorhalterung und dem Motor oder der Baueinheit, **dadurch gekennzeichnet, daß** zumindest zwei elastische Lagerelemente (8, 12, 17, 19, 50) den Motor (9) oder die Baueinheit (1) tragen, wobei jeweils die durch das elastische Element auf den Motor oder die Baueinheit ausgeübte Kraft in oder aus der Richtung der Drehachse (16) oder Schwerpunktachse des Motors (9) oder der motorischen Baueinheit (1) wirkt.

2. Schwingungsisolierende Lagerung für einen Motor oder eine motorisch angetriebene Baueinheit eines Haushaltsgeräts, insbesondere für eine Umwälzpumpe einer Geschirrspülmaschine, mit zumindest einem elastischen Lagerelement zwischen einer Motorhalterung und dem Motor oder der Baueinheit (1), **dadurch gekennzeichnet, daß** das zumindest eine elastische Lagerelement (80) den Motor (9) oder die Baueinheit trägt und das elastische Lagerelement (80) in einer zur Drehachse (16) oder Schwerpunktachse des Motors (9) oder der motorischen Baueinheit parallelen Richtung länglich ausgebildet ist, wobei die durch das zumindest eine elastische Lagerelement (80) auf den Motor (9) oder die Baueinheit (1) ausgeübte Kraft in oder aus der Richtung der Drehachse (16) oder Schwerpunktachse des Motors oder der motorischen Baueinheit wirkt.

3. Lagerung nach Anspruch 2, **dadurch gekennzeichnet, daß** die Länge des elastischen Lagerelements (80) mindestens das zweifache, vorzugsweise das dreifache der Breite beträgt.

4. Lagerung nach Anspruch 1, 2 oder 3, **dadurch gekennzeichnet, daß** das oder die elastischen Lagerelemente (8, 12, 17, 19, 50, 80) zumindest einen Abschnitt aufweisen, der bezüglich einer Dreh- oder Biegeachse, die parallel zur Drehachse (16) oder Schwerpunktachse des Motors (9) oder der Baueinheit (1) verläuft, eine geringe Steifigkeit aufweist.

5. Lagerung nach einem der vorhergehenden Ansprüche, **dadurch gekennzeichnet, daß** die Befestigungspunkte oder -bereiche (13) von zumindest zwei elastischen Lagerelementen (8, 12, 17, 19) am Motor (9) oder der Baueinheit (1) in Richtung Dreh- oder Schwerpunktachse (16) zueinander versetzt sind, vorzugsweise auf einer zur Dreh- oder Schwerpunktachse (16) parallelen Geraden liegen.

6. Lagerung nach einem der vorhergehenden Ansprüche, **dadurch gekennzeichnet, daß** zumindest zwei elastische Lagerelemente (17, 19) vorgesehen sind, deren Verbindungslinie zwischen den Befestigungspunkten oder - bereichen parallel verlaufen.

7. Lagerung nach einem der vorhergehenden Ansprüche, **dadurch gekennzeichnet, daß** zumindest zwei elastische Lagerelemente (12) vorgesehen sind, deren Verbindungslinie zwischen den Befestigungspunkten oder - bereichen (13, 14) unter einem Winkel zueinander verlaufen.

8. Lagerung nach einem der vorhergehenden Ansprüche, **dadurch gekennzeichnet, daß** die Befestigungspunkte oder - bereiche (52) von zumindest zwei elastischen Lagerelementen (50) am Motor (9) oder der motorischen Baueinheit am Umfang des Motors (9) oder der Baueinheit versetzt zueinander angeordnet sind, vorzugsweise in einer zur Dreh- oder Schwerpunktachse (16) senkrechten Ebene versetzt zueinander angeordnet sind.

9. Lagerung nach einem der vorhergehenden Ansprüche, **dadurch gekennzeichnet, daß** die Rückstellkraft des oder der elastischen Lagerelemente (17, 19) nichtlinear mit der Auslenkung zunimmt.

10. Lagerung nach Anspruch 9, **dadurch gekennzeichnet, daß** einem oder mehreren elastischen Lagerelementen (17) jeweils ein Anschlag (18) zur Begrenzung des maximalen Auslenkungswegs zugeordnet ist.

11. Lagerung nach einem der vorhergehenden Ansprüche, **dadurch gekennzeichnet, daß** zumindest ein Teil der elastischen Lagerelemente (19, 80) zwischen den Befestigungspunkten zumindest in eine Richtung einen verjüngten Querschnitt aufweist.

12. Lagerung nach Anspruch 11, **dadurch gekennzeichnet, daß** sich an den verjüngten Querschnittsabschnitt Anschlagschultern anschließen.

13. Lagerung nach einem der vorhergehenden Ansprüche, **dadurch gekennzeichnet, daß** das elastische Lagerelement (80) an einem oder beiden Enden (81) einen vergrößerten Querschnitt oder eine Ausnehmung (82) zur Befestigung des jeweiligen Endes (81) aufweist.

14. Lagerung nach einem der vorhergehenden Ansprüche, **dadurch gekennzeichnet, daß** die Motorhalterung ein Winkelelement (10) ist, das an einem Wandelement (11) befestigbar ist.

15. Lagerung nach einem der Ansprüche 1 bis 13, **dadurch gekennzeichnet, daß** die Motorhalterung (61) galgenförmig oder bogenförmig ausgebildet und an einem Bodenelement (62) befestigbar ist.

16. Lagerung nach einem der Ansprüche 1 bis 13, **dadurch gekennzeichnet, daß** die Motorhalterung (63) eine Traverse ist, die auf zwei seitlichen Stützelementen (64, 65) aufliegt.
